# EUROPÄISCHE PATENTSCHRIFT

(11) **EP 2 210 763 B1**
(45) Veröffentlichungstag und Bekanntmachung des Hinweises auf die Patenterteilung: **15.06.2011**
(21) Anmeldenummer: 09177281.4
(22) Anmeldetag: 27.11.2009
(51) Int. Cl.: B60K 37/02

(54) **Montage von Baugruppen mittels Bajonettverschluss**
Installation of sets of components using bayonet fixing
Montage de composants à l'aide d'une fermeture à baïonnette

(30) Priorität: 27.01.2009 DE 102009000418
(43) Veröffentlichungstag der Anmeldung: 28.07.2010
(73) Patentinhaber: Robert Bosch GmbH, 70442 Stuttgart (DE)
(72) Erfinder: Goessler, Harry, 64850, Schaafheim - Mosbach (DE); Reiss, Juergen, 71638, Ludwigsburg (DE); Schach, Harald, 71287, Weissach (DE); Kreuzer, Fritz, 73660, Urbach (DE)

(56) Entgegenhaltungen:
- EP-A2- 0 378 739
- DE-C- 344 001
- GB-A- 521 462
- US-A- 1 750 601

## Beschreibung

### Technisches Gebiet

Die Erfindung betrifft einen Frontrahmen mit mindestens einer Anzeigevorrichtung, die insbesondere als Bestandteile eines Kombiinstruments eines Kraftfahrzeugs ausgebildet sind.

### Stand der Technik

Aus der US 1,750,601 ist bereits eine Anzeigeeinrichtung insbesondere zur Montage an einer Instrumententafel eines Kraftfahrzeugs bekannt, bei der die Anzeigeeinrichtung mittels eines Bajonettverschlusses drehbar in einer Halterung an der Instrumententafel des Kraftfahrzeugs angebracht werden kann.

Mit der ständigen Entwicklung der Elektronik werden in den Frontrahmen elektronischer Geräte eine zunehmende Anzahl von Informationen für den Nutzer angezeigt. Dabei kommt es bei der Integration der Anzeigevorrichtungen darauf an, die üblicherweise in Großserien produzierten Teile möglichst einfach und schnell zusammenzubauen. So zeigt beispielsweise die DE 101 05 471 A1 eine röhrenförmige Anzeigevorrichtung für ein Kombiinstrument eines Kraftfahrzeugs, deren Außenschale einstückig an dem Frontrahmen des Kombiinstruments angespritzt ist. Ober verschiedene Rasthaken werden dann eine innere Schale, ein Deckglas und eventuelle Zierringe der Anzeigevorrichtung im Inneren der Anzeigeröhre befestigt.

Die Oberfläche der Anzeigevorrichtung ist dabei aufgrund des Anspritzvorgangs von vornerein an die Oberfläche des Frontrahmens gebunden und bietet somit keine Flexibilität in der Variation der Oberflächen. Zudem ist durch die aus dem Frontrahmen heraus vorstehenden Außenschalen der Anzeigevorrichtungen das zur Lagerung benötigte Volumen relativ groß.

Aus der EP 0 569 953 A1 ist weiterhin bekannt, das Zifferblatt eines Fahrzeug-Anzeigegeräts mittels eines bajonettartigen Verschlusses mit einem Betätigungsmechanismus für den Zeiger des Anzeigegeräts zu verbinden.

### Offenbarung der Erfindung

Aufgabe der Erfindung ist es, bei hoher Flexibilität bezüglich der Oberflächengestaltung der Komponenten eine platzsparende Lagerung dieser Komponenten vor dem Zusammenbau zu ermöglichen. Ferner besteht die Aufgabe der Erfindung darin, einen entsprechenden Frontrahmen mit mindestens einer Anzeigevorrichtung bereitzustellen, die erfindungsgemäß montiert werden können.

Diese Aufgabe wird durch den Frontrahmen mit mindestens einer Anzeigevorrichtung gemäß Anspruch 1 gelöst.

Die der vorliegenden Erfindung zugrundeliegende Idee besteht darin, die Anzeigevorrichtung mit einer Außenschale, in deren Innerem eine Anzeigeeinheit angeordnet ist, als Baugruppe vorzumontieren und dann die vormontierte Baugruppe durch Befestigungsmittel in einer Öffnung des Frontrahmens zu befestigen.

Die Außenschale der Anzeigevorrichtung ist dabei nicht mehr stoffschlüssig mit dem Frontrahmen ausgeführt, sondern sie wird als Teil der Anzeigevorrichtungs-Baugruppe mit dem Frontrahmen verbunden. Ein wesentlicher Vorteil ist dabei, dass die Außenschale aus Material und/oder mit Oberflächengestaltungen, beispielsweise Oberflächenüberzügen ausgebildet werden kann, die unabhängig von dem Material bzw. der Gestaltung der Oberfläche des Frontrahmens sind. Die derartige Verbindung der Anzeigevorrichtung mit dem Frontrahmen bietet dabei zusätzlich auch die Möglichkeit zu jederzeit durchführbaren kurzfristigen Wechseln des Designs der Anzeigevorrichtung an der Montagelinie.

Das Fehlen von herausstehenden Außenschalen am Frontrahmen gestattet ferner ein geringeres Volumen des Frontrahmens und somit die Einsparung von Transport- und Lagerraum. Darüber hinaus kann die Anzeigevorrichtung als fertig vormontierte Baugruppe an den Montageort angeliefert werden, wodurch eine flexibilisierende Trennung der einzelnen Montageschritte ermöglicht wird.

Vorteilhafte Weiterbildungen und Verbesserungen des erfindungsgemäßen Montageverfahrens sowie des erfindungsgemäßen Frontrahmens und der Anzeigevorrichtung ergeben sich aus den abhängigen Ansprüchen.

So kann die Befestigung der Anzeigevorrichtung an dem Frontrahmen vorzugsweise lösbar ausgeführt werden. Dies erlaubt einen einfachen Austausch einer defekten Anzeigevorrichtung oder eine nachträgliche Änderung des Designs.

Die vormontierte Baugruppe der Anzeigevorrichtung kann vorteilhafterweise neben der Anzeigeeinheit zur Ausgabe von Informationen und der Außenschale auch eine Innenschale, ein Deckglas sowie eventuell einen oder mehrere Zier- oder Deckringe aufweisen, wodurch die Gestaltung der Anzeigevorrichtung flexibel anpassbar ist.

In einer erfindungsgemäßen Ausführung der Erfindung bestehen die Befestigungsmittel zwischen Frontrahmen und Anzeigevorrichtung aus einem Bajonettverschluss. Die Befestigung der Anzeigevorrichtung an dem Frontrahmen mittels eines Bajonettverschlusses ist besonders schnell und einfach durchführbar. Zum Verbinden der beiden Teile werden dazu beispielsweise T-förmig oder L-förmig ausgebildete vorstehende Elemente des einen Teils in dafür vorgesehene Aufnahmeöffnungen des anderen Teils auf eine dem Fachmann an sich bekannte Weise eingesetzt und gegeneinander verdreht. Die mindestens zwei, vorteilhafterweise drei vorstehenden Elemente des Bajonettverschlusses können dabei jeweils an dem Frontrahmen und/oder an der Anzeigevorrichtung angeordnet sein.

Um bei geschlossenem Bajonettverschluss die Aufnahmeöffnungen durch die Außenschale der Anzeigevorrichtung vollständig abzudecken und von aussen nicht sichtbar werden zu lassen, weist der Bajonettverschluss in einer besonders bevorzugten Ausführungsform an der Aussenschale der Anzeigevorrichtung axial und/oder radial nach innen vorstehende Elemente auf, die in entsprechende Aufnahmeöffnungen eingreifen, welche hinter der Öffnung für die Anzeigevorrichtung am Frnotrahmen vorgesehen sind.

In einer erfindungsgemäßen Weiterbildung des Bajonettverschlusses weist der Frontrahmen und/oder die Anzeigevorrichtung mindestens ein Führungsmittel auf, durch das die winkelmäßige Ausrichtung von Frontrahmen zur Anzeigevorrichtung eindeutig festgelegt werden kann. Durch dieses Führungsmittel kann eine Anzeigevorrichtung stets nur lagerichtig in den Frontrahmen eingesetzt werden, so dass Fehler bei der Montage vermieden werden.

Derartige Führungsmittel können zum Beispiel eine oder mehrere Markierungen am Frontrahmen und/oder an der Anzeigevorrichtung umfassen, welche beim Zusammenbau in Deckung gebracht werden sollen. Besonders vorteilhaft ist jedoch die Ausbildung der Führungsmittel durch die Segmente des Bajonettverschlusses selbst. So erlaubt beispielsweise eine in Umfangsrichtung ungleichmäßige Anordnung der vorspringenden Elemente des Bajonettverschlusses nur eine einzige Position, in der sie mit den ihnen jeweils zugeordneten Aufnahmeöffnungen zum Zusammenbau in Deckung gebracht werden können.

Gemäß einer weiteren bevorzugten Ausgestaltung weisen der Frontrahmen und/oder die mindestens eine Anzeigevorrichtung Verriegelungsmittel zur Verriegelung der Anzeigevorrichtung in ihrer Endlage im Frontrahmen auf. Der Begriff Endlage bezeichnet dabei die vorgesehene Position der Anzeigevorrichtung am Frontrahmen bei geschlossenem Bajonettverschluss. Durch die Verriegelungsmittel wird die Anzeigevorrichtung in dieser Position arretiert.

In einer besonders bevorzugten Ausgestaltung sind Ausgleichsmittel für die Kompensierung eines axialen Spiels vorgesehen, das zwischen dem Frontrahmen und der mindestens einen Anzeigevorrichtung auftreten kann. Durch die Ausgleichsmittel wird die zum Halten der Verbindung zwischen Frontrahmen und Anzeigevorrichtung notwendige Verspannung der vorstehenden Elemente in den Aufnahmeöffnungen auch unter unterschiedlichen Temperaturbedingungen zumindest teilweise aufrechterhalten. Die Mittel können vorzugsweise am Bajonettverschluss vorgesehen sein, wodurch eine besonders einfache Auslegung des Bajonettverschlusses auf die notwendige Mindest-Verspannung ermöglicht wird.

Vorteilhafterweise kann das Verfahren zur Montage der Anzeigevorrichtung in dem Frontrahmen für mehrere Anzeigevorrichtungen gleichzeitig durchgeführt werden, wodurch der Zeitaufwand für die Montage verkürzt werden kann. Idealerweise sind die Bajonettverschlüsse zumindest soweit identisch gestaltet, dass die zur Befestigung der Anzeigevorrichtungen notwendige Bewegung gleichförmig ausgeführt werden kann.

Vorzugsweise sind bei mehreren in einen Frontrahmen einzubauenden Anzeigevorrichtungen die Baugruppen möglichst gleichteilig gestaltet, was den Zusammenbau und die Montage der Anzeigevorrichtungen zusätzlich vereinfacht, da die einzelnen Arbeitsschritte zumindest annähernd identisch ausgeführt werden können. Außerdem ermöglicht dieses Gleichteileprinzip wesentlich günstigere Werkzeugkosten. In einer Weiterbildung des Verfahrens ist es auch möglich, gleichförmige Arbeitsschritte an den einzubauenden Baugruppen parallel auszuführen.

Eine besonders vorteilhafte Ausführung ist die Ausbildung des Frontrahmen mit mindestens einer Anzeigevorrichtung als Bestandteile eines Kombiinstruments eines Kraftfahrzeugs. Dabei können in dem Kombiinstrument verschiedene Anzeigevorrichtungen auf die erfindungegmäße Art und Weise eingebaut werden.

Besonders vorteilhaft ist die Anwendung des Montageverfahrens nach einem der Ansprüche 1 bis 3 bei einem Frontrahmen mit mindestens einer Anzeigevorrichtung nach einem der Ansprüche 4 bis 12. Dies ermöglicht einen besonders einfachen Zusammenbau beispielsweise eines Kombiinstruments und eine große Flexibilität bei der Auswahl der zu verbauenden Anzeigevorrichtung.

In den Zeichnungen sind Ausführungsbeispiele der Erfindung dargestellt, die in der nachfolgenden Beschreibung näher erläutert werden. Es zeigen:
- Figur 1:: Darstellung einer an einem Frontrahmen erfindungsgemäß befestigten Anzeigevorrichtung;
- Figur 2:: separate Darstellung der Außenschale einer Anzeigevorrichtung mit drei Bajonettsegmenten;
- Figur 3:: ein einzelnes Bajonettsegment aus Figur 2;
- Figur 4:: einen Schnitt durch ein Bajonettsegment einer alternativen Ausführungsform; und
- Figur 5:: eine Teilansicht einer Aufnahmeöffnung eines Bajonettverschlusses mit Mitteln zur Verriegelung.

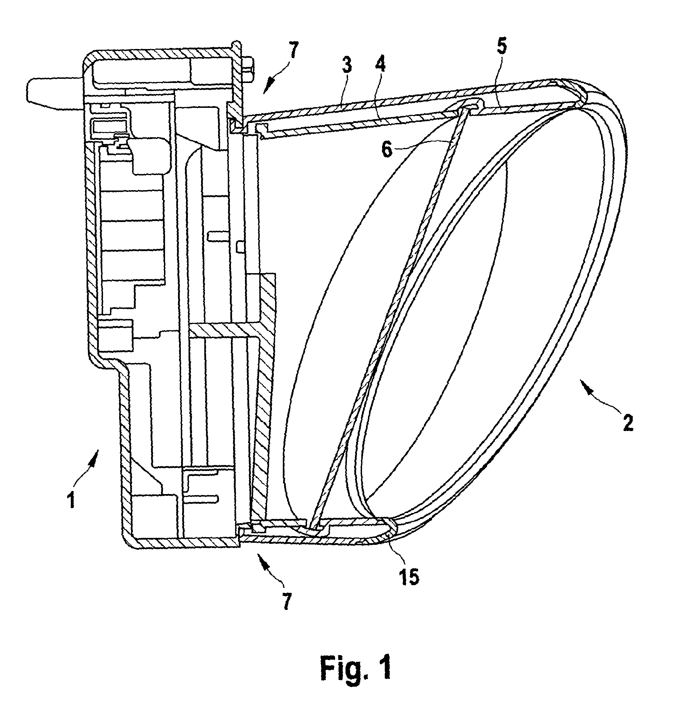

Figur 1 zeigt einen Frontrahmen 1, der mit einer in Tubenbauform ausgebildeten Anzeigevorrichtung 2 verbunden ist. Die als vormontierte Baugruppe ausgeführte Anzeigevorrichtung 2 weist eine im folgenden als Außentube 3 bezeichnete röhrenförmige Außenschale auf. An der Außentube 3 ist eine zweiteilige Innenschale befestigt, die nachfolgend als Innentube 4, 5 bezeichnet wird. Die Innentube 4, 5 hält ein Deckglas 6, welches die Innentube 4, 5 in eine axial hintere Innentube 4 und eine axial vordere Innentube 5 unterteilt. Das axial vordere Ende der Tubenbaugruppe wird von einem Tubenring 15 gebildet. Mit axial vorne wird dabei das bei einer eingebauten Tubenbaugruppe dem Frontrahmen 1 abgewandte Ende der Tubenbaugruppe bezeichnet.

Die als Tubenbaugruppe ausgeführte Anzeigevorrichtung 2 wird durch Befestigungsmittel 7 am Frontrahmen 1 befestigt, die durch einen Bajonettverschluss gebildet sind. Dazu werden axial vorstehende Elemente 7a, 7b und 7c des Bajonettverschlusses in ihnen zugeordnete, hier nicht gezeigte Aufnahmeöffnungen am Frontrahmens 1 eingesetzt und darin verdreht.

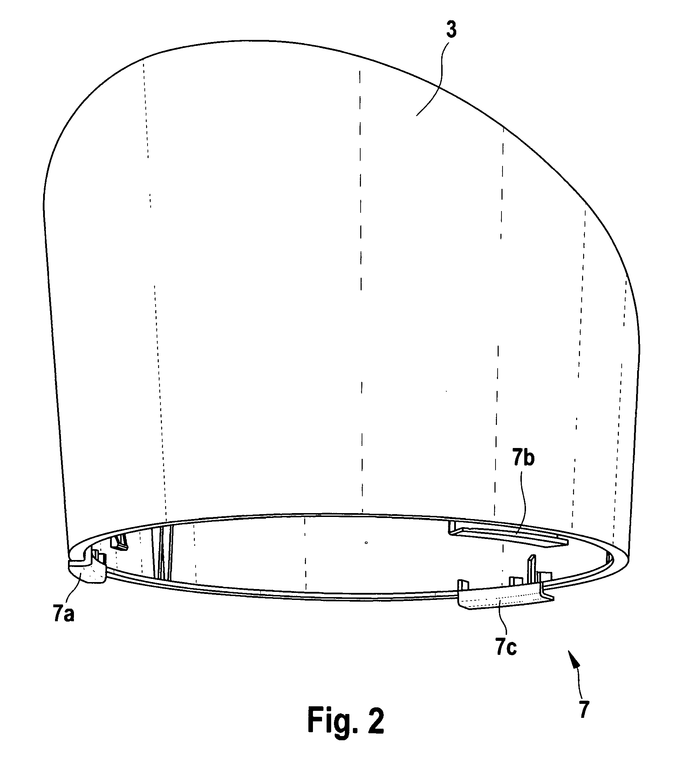

Figur 2 zeigt eine Außentube 3 mit radial nach innen vorstehenden Elementen 7a, 7b, 7c eines Bajonettverschlusses in einer drei-segmentigen Ausführung. Durch diesen drei-segmentigen Aufbau der vorstehenden Elemente 7a bis 7c lassen sich die am geschlossenen Bajonettverschlusses wirkenden Haltekräfte umfangsmäßig gut verteilen. Hierdurch wird ein umfangsmäßig vollständiges Anliegen der Außentube 3 an dem hier nicht gezeigten Frontrahmen 1 dauerhaft gewährleistet. Durch die nur nach innen vorstehenden Elemente 7a bis 7c werden die zugehörigen Aufnahmeöffnungen am Frontrahmen 1 bei montierter Außentube 3 vollständig verdeckt, so dass sie das äußere Erscheinungsbild nicht beeinträchtigen.

Die vorstehenden Elemente 7a bis 7c sind in diesem Beispiel alle an der in Aufsicht gezeigten Außentube 3 vorgesehen. Sie stehen am axial hinteren Ende radial nach innen vor und sind nicht gleichwinkelig, also ungleichmäßig auf dem Umfang verteilt. Die drei axial vorstehenden Elemente 7a bis 7c der Außentube 3 können somit nur in einer bestimmten Position mit den ihnen zugeordneten, hier nicht gezeigten Aufnahmeöffnungen am Frontrahmen 1 in Deckung gebracht, eingeführt und dann verdreht werden, so dass die Anzeigevorrichtung 2 in ihrer Endlage automatisch lagerichtig positioniert ist.

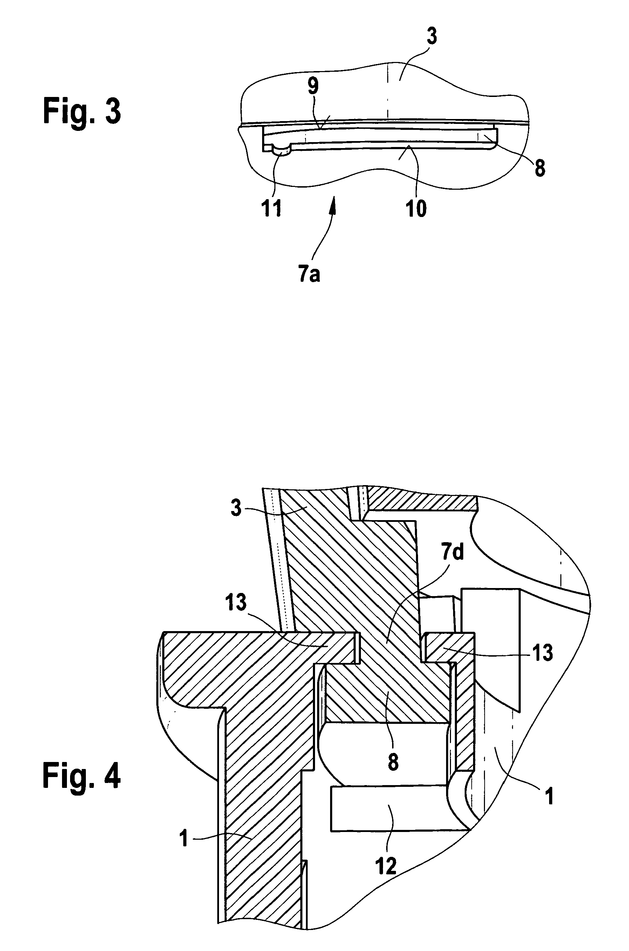

Figur 3 zeigt eine einzelnes der an der Außentube 3 axial vorstehenden Elemente aus Figur 2 in einer vergrößerten Darstellung. Dieses Element 7a weist an seinem hinteren Ende einen radial nach innen abstehenden Fortsatz 8 auf, wobei das vorstehende Element 7a entweder T- oder L-förmig ausgebildet ist. Der radial abstehenden Fortsatz 8 weist eine der Außentube 3 zugewandte Bajonett-Auflagefläche 9 auf. Die Bajonett-Auflagefläche 9 ist teilweise rampenförmig geneigt, was ein besonders einfaches und kraftschlüssiges Verschließen des Bajonettverschlusses ermöglicht.

Auf der der Bajonett-Auflagefläche 9 entgegengesetzten Fläche 10 des radial abstehenden Fortsatzes 8 ist eine kleine Erhöhung 11 vorgesehen. Diese Erhöhung 11 dient dem axialen Spielausgleich und gewährleistet ein zumindest teilweises Erhalten der Verspannung des geschlossenen Bajonettverschlusses auch im Wärmelastfall. Die hier gezeigte Erhöhung 11 ist an dem rampenförmigen Ende des radial abstehenden Fortsatzes 8 vorgesehen und im wesentlichen warzenförmig ausgebildet.

Figur 4 zeigt einen Schnitt durch ein alternatives Bajonettelement 7d. Das axial und radial nach innen vorstehenden Element 7d der Außentube 3 einer Anzeigevorrichtung ist in eine Aufnahmeöffnung 12 des Frontrahmens 1 eingeführt. Das vorstehende Element 7d ist hier T-förmig ausgebildet, so dass der Fortsatz 8 des vorstehenden Elements 7d beidseitig von den die Aufnahmeöffnung 12 des Frontrahmens 1 begrenzenden Winkeln 13 gehalten wird.

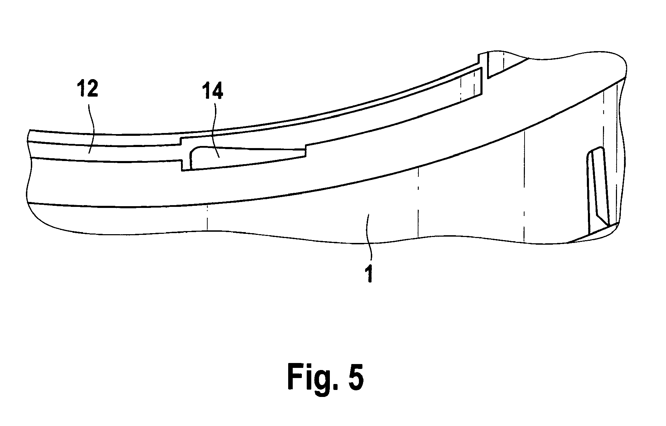

In Figur 5 ist eine Teilansicht einer Aufnahmeöffnung 12 eines Bajonettverschlusses mit einem Verriegelungsmittel 14 gezeigt. Die Aufnahmeöffnung 12 ist dabei am Frontrahmen 1 vorgesehen. Am Frontrahmen 1 angebrachte federnde Clipse 14 verriegeln so die in die Öffnung des Forntrahmens 1 eingesetzte Tubenbaugruppe der Anzeigevorrichtung in ihrer Endlage.

## Patentansprüche

1. Frontrahmen (1) mit mindestens einer Anzeigevorrichtung (2), welche eine Außenschale (3) mit einer darin angeordneten Anzeigeneinheit aufweist, wobei der Frontrahmen (1) mindestens eine Öffnung aufweist, in der die mindestens eine Anzeigevorrichtung (2) als vormontierte Baugruppe mittels Befestigungsmitteln (7) an dem Frontrahmen (1) befestigbar ist, wobei die Befestigungsmittel (7) einen Bajonettverschluss umfassen und wobei der Frontrahmen (1) und/oder die Anzeigevorrichtung (2) mindestens ein Führungsmittel aufweisen, durch das die winkelmäßige Ausrichtung der Anzeigevorrichtung (2) zum Frontrahmen (1) eindeutig festlegbar ist, **dadurch gekennzeichnet, dass** die Führungsmittel durch umfangsmäßig ungleichmäßig angeordnete vorspringende Elemente (7a, 7b, 7c) des Bajonettverschlusses gebildet sind.

2. Frontrahmen (1) mit mindestens einer Anzeigevorrichtung (2) nach Anspruch 1, **dadurch gekennzeichnet, dass** die mindestens eine Anzeigevorrichtung (2) lösbar an dem Frontrahmen (1) befestigt ist.

3. Frontrahmen (1) mit mindestens einer Anzeigevorrichtung (2) nach einem der vorhergehenden Ansprüche, **dadurch gekennzeichnet, dass** innerhalb der Außenschale (3) der mindestens einen Anzeigevorrichtung (2) eine Innenschale (4, 5), ein Deckglas (6) und insbesondere ein oder vorzugsweise mehrere Zierringe angeordnet sind.

4. Frontrahmen (1) mit mindestens einer Anzeigevorrichtung (2) nach einem der vorhergehenden Ansprüche, **dadurch gekennzeichnet, dass** der Frontrahmen (1) und/oder die mindestens eine Anzeigevorrichtung (2) Verriegelungsmittel (14) aufweisen, durch die die mindestens eine Anzeigevorrichtung (2) am Frontrahmen (1) in Endlage verriegelbar ist.

5. Frontrahmen (1) mit mindestens einer Anzeigevorrichtung (2) nach einem der vorhergehenden Ansprüche, **dadurch gekennzeichnet, dass** Ausgleichsmittel (11) für einen axialen Spielausgleich zwischen dem Frontrahmen (1) und der mindestens einen Anzeigevorrichtung (2) vorgesehen sind, die vorzugsweise am Befestigungsmittel (7) angeordnet sind.

6. Frontrahmen (1) mit mindestens einer Anzeigevorrichtung (2) nach einem der vorhergehenden Ansprüche, **dadurch gekennzeichnet, dass** sie als Bestandteile eines Kombiinstruments eines Kraftfahrzeugs ausgebildet sind.

## Claims

1. Front frame (1) with at least one display device (2) which has an outer shell (3) with a display unit arranged therein, wherein the front frame (1) has at least one opening in which the at least one display device (2) can be fastened in the form of a preassembled subassembly to the front frame (1) by means of fastening means (7), wherein the fastening means (7) comprise a bayonet fastening, and wherein the front frame (1) and/or the display device (2) have/has at least one guide means which can be used to unambiguously define the angular orientation of the display device (2) with respect to the front frame (1), **characterized in that** the guide means are formed by projecting elements (7a, 7b, 7c) of the bayonet fastening, said elements being arranged non-uniformly circumferentially.

2. Front frame (1) with at least one display device (2) according to Claim 1, **characterized in that** the at least one display device (2) is fastened releasably to the front frame (1).

3. Front frame (1) with at least one display device (2) according to one of the preceding claims, **characterized in that** an inner shell (4, 5), a cover glass (6) and in particular one or preferably more decorative rings are arranged within the outer shell (3) of the at least one display device (2).

4. Front frame (1) with at least one display device (2) according to one of the preceding claims, **characterized in that** the front frame (1) and/or the at least one display device (2) have/has locking means (14) which can be used to lock the at least one display device (2) to the front frame (1) in the final position.

5. Front frame (1) with at least one display device (2) according to one of the preceding claims, **characterized in that** compensating means (11) are provided for axial compensation for play between the front frame (1) and the at least one display device (2), said compensating means preferably being arranged on the fastening means (7).

6. Front frame (1) with at least one display device (2) according to one of the preceding claims, **characterized in that** said front frame and display device are designed as components of a multi-purpose instrument of a motor vehicle.

## Revendications

1. Châssis avant (1) comprenant au moins un dispositif d'affichage (2) qui présente une coque extérieure (3) avec une unité d'affichage disposée à l'intérieur, le châssis avant (1) présentant au moins une ouverture dans laquelle l'au moins un dispositif d'affichage (2) peut être fixé sur le châssis avant (1) en tant que module prémonté au moyen de moyens de fixation (7), les moyens de fixation (7) comprenant une fermeture à baïonnette et le châssis avant (1) et/ou le dispositif d'affichage (2) présentant au moins un moyen de guidage, grâce auquel l'orientation angulaire du dispositif d'affichage (2) par rapport au châssis avant (1) peut être établie univoquement, **caractérisé en ce que** les moyens de guidage sont formés par des éléments saillants (7a, 7b, 7c) de la fermeture à baïonnette disposés de manière irrégulière sur la périphérie.

2. Châssis avant (1) comprenant au moins un dispositif d'affichage (2) selon la revendication 1, **caractérisé en ce que** l'au moins un dispositif d'affichage (2) est fixé de manière détachable au châssis avant (1).

3. Châssis avant (1) comprenant au moins un dispositif d'affichage (2) selon l'une quelconque des revendications précédentes, **caractérisé en ce qu'**à l'intérieur de la coque extérieure (3) de l'au moins un dispositif d'affichage (2) sont disposés une coque intérieure (4, 5), un verre de recouvrement (6) et en particulier un ou de préférence plusieurs anneaux décoratifs.

4. Châssis avant (1) comprenant au moins un dispositif d'affichage (2) selon l'une quelconque des revendications précédentes, **caractérisé en ce que** le châssis avant (1) et/ou l'au moins un dispositif d'affichage (2) présentent des moyens de verrouillage (14) qui permettent de verrouiller l'au moins un dispositif d'affichage (2) en position d'extrémité sur le châssis avant (1).

5. Châssis avant (1) comprenant au moins un dispositif d'affichage (2) selon l'une quelconque des revendications précédentes, **caractérisé en ce que** des moyens de compensation (11) pour une compensation du jeu axial sont prévus entre le châssis avant (1) et l'au moins un dispositif d'affichage (2), lesquels sont disposés de préférence sur le moyen de fixation (7).

6. Châssis avant (1) comprenant au moins un dispositif d'affichage (2) selon l'une quelconque des revendications précédentes, **caractérisé en ce qu'**ils sont réalisés sous forme de constituants d'un combiné d'instruments d'un véhicule automobile.
